# EUROPEAN PATENT APPLICATION

(11) **EP 3 199 931 A1**
(43) Date of publication of application: **02.08.2017**
(21) Application number: 16153054.8
(22) Date of filing: 28.01.2016
(51) Int. Cl.: G01K 17/06

(54) **A CONSUMPTION METER WITH A POWER SOURCE ENERGY CALCULATION UNIT**

(71) Applicant: Kamstrup A/S, 8660 Skanderborg (DK)
(72) Inventor: Jensen, Mads Erik Lund, DK-8840 Rødkærsbro (DK); Savolainen, Juha-Matti, DK-8541 Skødstrup (DK); Nielsen, Søren Tønnes, DK-8355 Solbjerg (DK)
(74) Representative: Plougmann Vingtoft a/s

(57) **Abstract**

A consumption meter is provided for measuring one of a fluid flow rate and an energy flow rate of a utility, the consumption meter comprising: measuring means for measuring the one of the fluid flow rate and the energy flow rate of the utility, an electronic circuit for operating the measuring means, a power source for operating the consumption meter and having a power source energy, and a power source energy calculation unit being arranged to (a1) calculate an estimate of the remaining power source energy, (a2) calculate a budgeted remaining power source energy, and (a3) compare the estimate of the remaining power source energy and the budgeted remaining power source energy, and, wherein the consumption meter is arranged to (b1) measure the one of the fluid flow rate and the energy flow rate with a measurement frequency F1; (b2) measure the one of the fluid flow rate and the energy flow rate with a measurement frequency F2, F2 > F1, provided that a first change in any of the fluid flow rate or the energy flow rate exceeds a first predetermined change of the fluid flow rate or the energy flow rate, respectively, and that the estimate of the remaining power source energy exceeds the budgeted remaining power source energy, and (b3) measure the one of the fluid flow rate and the energy flow rate with the measurement frequency F1, provided that a second change in any of the fluid flow rate or the energy flow rate goes under a second predetermined change of the fluid flow rate or the energy flow rate, respectively, or that a certain time interval has elapsed during (b2).

The consumption meter provided is capable of measuring precisely the fluid flow rate or the energy flow rate during periods of changes with such flow rates without compromising the consumption of power source energy of the consumption meter.

## Description

### FIELD OF THE INVENTION

The present invention relates to a consumption meter and a method for measuring a flow rate of utility at different flow rate measurement frequencies.

### BACKGROUND OF THE INVENTION

A consumption meter may be used for measuring utility usage in connection with charging of a consumed quantity of the utility, *e.g.* water, heating, cooling, gas, or electricity.

Such meters are traditionally battery powered, and their lifetime is likely defined by the lifetime of the battery. The lifetime of the battery of a consumption meter may be as long as 10 or even 15 years or more. To achieve such long lifetime, close control of the battery's energy consumption is required.

The energy consumption relates to two main activities of the consumption meter: Provision and transmission of utility data. With the activity of utility data provision, utility data are recorded such a by measuring a flow rate of the utility, and further processed to provide data on the actual consumption of the utility by the consumer. With the transmission of utility data, the processed data are transmitted from the consumption meter to a main collector of the utility network, such as by wireless radio frequency transmission to the main collector.

One way of controlling the battery's energy consumption is disclosed with European Patent EP 2 072 982 B1 to Qundis GmbH of Germany, which discloses a procedure for operating an electronic consumption meter according to which the transmission frequency is calculated from the battery capacity and a predefined useful lifetime of the consumption meter in such a way that the battery is used up at the end of the lifetime of the consumption meter.

Another aspect relating to energy consumption of a consumption meter relates to the flow rate measurement frequency. Thus the ultego III smart heat meter to ista applies an adaptive temperature measurement scheme according to which the heat meter in case of sudden increases in the flow rate increases the temperature measurement frequency so as to measure the temperature at a higher measurement frequency, *i.e.* more often. Whenever the temperature is stabilized the heat meter returns to the original lower measurement frequency.

Such higher measurement frequency, however, is likely to jeopardize the long-term energy consumption of the consumption meter.

Hence there is a need for a consumption meter which allows a close control of the battery's energy consumption of the consumption meter, while still allowing close monitoring of the utility flow rate even under conditions of sudden changes of the flow rate.

### SUMMARY OF THE INVENTION

Accordingly it would be advantageous to achieve a consumption meter to fulfil the above need. In general, the invention preferably seeks to mitigate, alleviate or eliminate one or more of the above mentioned disadvantages of the prior art.

Accordingly, in a first aspect of the invention there is provided a consumption meter for measuring one of a fluid flow rate and an energy flow rate of a utility, the consumption meter comprising:
- measuring means for measuring the one of the fluid flow rate and the energy flow rate of the utility,
- an electronic circuit for operating the measuring means,
- a power source for operating the consumption meter and having a power source energy, and
- a power source energy calculation unit being arranged to:
- (a1) calculate an estimate of the remaining power source energy,
- (a2) calculate a budgeted remaining power source energy, and
- (a3) compare the estimate of the remaining power source energy and the budgeted remaining power source energy, and,
wherein the consumption meter is arranged to:
- (b1) measure the one of the fluid flow rate and the energy flow rate with a measurement frequency F1;
- (b2) measure the one of the fluid flow rate and the energy flow rate with a measurement frequency F2, F2 > F1, provided that a first change in any of the fluid flow rate or the energy flow rate exceeds a first predetermined change of the fluid flow rate or the energy flow rate, respectively, and that the estimate of the remaining power source energy exceeds the budgeted remaining power source energy, and
- (b3) measure the one of the fluid flow rate and the energy flow rate with the measurement frequency F1, provided that a second change in any of the fluid flow rate or the energy flow rate goes under a second predetermined change of the fluid flow rate or the energy flow rate, respectively, or that a certain time interval has elapsed during (b2).

The consumption meter according to the invention may be a consumption meter for measuring the fluid flow rate or the energy flow rate of a utility. The consumption meter may accordingly be a flow meter, such as a water meter, measuring the fluid flow rate, or it may be a meter involving flow of energy, such as a heat meter or a cooling meter, measuring the energy flow rate.

With the consumption meter of the present invention, a power source energy calculation unit is arranged to calculate an estimate of the remaining energy of the power source of the consumption meter as well a budgeted remaining energy of the power source, and to compare the two.

In the context of the present invention, the "power source" of the consumption meter should be understood as an internal power source for operating the consumption meter, such as a battery, which may be a primary battery, *i.e.* a non-rechargeable battery, or a secondary battery, *i.e.* a rechargeable battery, or it may be a capacitor, or a combination thereof.

In the context of the present invention, the "estimate of the remaining power source energy" should be understood as an estimate of the actual amount of energy left with the power source at the time of the estimation. Overall the amount of energy left with the power source corresponds to the initial power source energy corrected for the amount of energy consumed up to the time of the estimation. Thus the estimate of the remaining power source energy may be calculated as the initial energy minus the sum of each of the small amounts of the energy consumed with each of the flow rate measurements actually conducted up to the time of estimation. Per example, having conducted, at the second birthday of the consumption meter, 20,000 flow rate measurements of an energy consumption of 10 µAh per flow rate measurement, a battery of an initial capacity of 1000 mAh has a remaining energy of 800 mAh.

Also in the context of the present invention, the "budgeted remaining power source energy" should be understood as a forecast of the amount of energy expected to be left with the power source at the time of the above estimation. Compared to the above estimate, which relates to the actually remaining energy with the power source, the budgeted remaining energy relates to the theoretically remaining energy with the power source at the time of the estimation, however, calculated initially, prior to the onset of the use of the power source. The budgeted remaining power source energy may be calculated as the initial energy minus the sum of each the small amounts of energy to be consumed with each of the flow rate measurements expected to be conducted up to the time of estimation. Per example, the budgeted amount of power source energy left may be calculated from a forecast of a uniform energy consumption rate over the lifetime of the consumption meter and the power source. Per the example, the battery of the initial capacity of 1000 mAh and the energy consumption of 10 µAh per flow rate measurement has a theoretical capacity of 100,000 flow rate measurements over its lifetime. Assuming a lifetime of 5 years, the yearly budget rate is 20,000 flow rate measurements or 200 mAh, and, at the second birthday of the consumption meter, the budgeted remaining power source energy is 600 mAh. Assuming instead a lifetime of 20 years, the yearly budget rate is 5,000 flow rate measurements or 50 mAh, and, at the second birthday of the consumption meter, the budgeted remaining power source energy is 900 mAh.

Whereas the estimate of the remaining power source energy and the budgeted remaining power source energy may be calculated taking into account energy consumption relating to flow rate measurements only, it should be understood that both of the estimate and budgeted remaining energy may as well take into account energy consumption related to data package transmission and any self-discharge of the power source.

According to the invention, the above estimate of the remaining power source energy and budgeted remaining power source energy are compared. Thus, per the examples, the estimated energy left of 800 mAh is compared to the budgeted remaining energy of 600 mAh and 900 mAh, respectively. Thus, with the first example, more energy is remaining with the power source than budgeted, *i.e.* expected with the budget, *i.e.* 800 mAh compared to 600 mAh. With the second example, less energy is remaining than expected, *i.e.* 800 mAh compared to 900 mAh. Whether an excess of power source energy is left over the budget or not, as with the first example and the second example, respectively, determines the subsequent flow rate scheme as described in more detail below.

For clarification, in the context of the present invention, the "energy" of the "energy flow rate" should be distinguished from the "energy" of the "power source energy". Thus, whereas the former relates to the utility supplied to a utility consumer and being measured by means of the subject consumption meter, the latter relates to the power source of the consumption meter, such as a battery of the consumption meter, for powering the operations the consumption meter.

Further with the invention, the consumption meter is arranged to measure the fluid flow rate or the energy flow rate at a measurement frequency F1.

In the context of the present invention, the term "measurement frequency" is to be understood as the rate with which measurements are made or the number of measurements per unit of time, such as one measurement per minute, *i.e.* one measurement every minute, or one measurement every 20th second, *i.e.* three measurements per minute.

Now, with (b2), a change in the fluid flow rate of the utility or in the energy flow rate of the utility may be observed. Upon observation of such change of any of the fluid or energy flow rates, the consumption meter is arranged to shift the measurement frequency from F1 to F2, F2 > F1, *i.e.* to shift to a higher measurement frequency than originally applied. Such shift to a higher measurement frequency is beneficial in order to more closely monitor the fluid or energy flow rate during the change, and in turn to be able to more precisely calculate the consumed utility.

Shifting to a higher measurement frequency, however, is not free: A higher measurement frequency involves more flow rate measurements being conducted during each time interval, such as every minute, and in turn a higher power source energy consumption per time interval.

According to the invention, the shift of measurement frequency is therefore provisional: The shift of measurement frequency is only made in case the change in any of the flow rates exceeds a certain predetermined flow rate value. Per example, the fluid flow rate may change from 10 l/minute to 15 l/minute, and the predetermined fluid flow rate change may be 2 l/minute. In such case the change in the flow rate of 5 l/minute exceeds the threshold value of 2 l/minute, and the measurement frequency shift may be implemented. Per another example the predetermined fluid flow rate change may be 10 l/minute, in which case no measurement frequency shift is implemented, as the threshold value is not exceeded by the actual flow rate change.

Another provision applies as well to the measurement frequency shift: The shift of measurement frequency from F1 to F2 is only made in case the estimated remaining power source energy exceeds the budgeted remaining power source energy, *i.e.* in case an excess of remaining power source energy over the budgeted remaining energy is available from the power source at the time of the flow rate change. In the contrary case, *i.e.* if no such excess is available, the measurement frequency shift is aborted and the measurement frequency F1 is maintained. Thus, from the above two example, the measurement frequency may be implemented in the first example of the remaining energy of 800 mAh exceeding the budgeted energy of 600 mAh, whereas the shift is aborted with the second example, the remaining energy of 800 mAh being less than the budgeted remaining energy 900 mAh.

According to the invention it should be understood that the estimation and budgeting of remaining energy is an on-going process, *i.e.* that the calculations and comparison between the calculated values may be made with every flow rate measurement.

Also any excess of remaining energy over the budgeted remaining energy may develop, such as increase or decrease, or such as disappearing and/or reappearing, depending on the actual consumption of power source energy.

Thus, whereas a measurement frequency shift may be aborted for lack of excessive remaining energy, such shortage may be recovered in case of less actual energy consumption than budgeted over a subsequent period. Thus, one measurement frequency shift abortion does not imply that all future measurement frequency shifts are aborted. Per example, a shortage of 1 mAh, such as with an actually remaining energy of 599 mAh and a budgeted remaining energy of 600 mAh, may be recovered in case less flow rate measurements than budgeted are conducted over a subsequent period. Further per example, 400 flow rate measurements, each of 10 µAh, may have been budgeted for an upcoming period. Accordingly, at the end of such period, the budget is reduced from 600 mAh to 596 mAh. Now, in case only 100 flow rate measurements are actually conducted during the period, the estimated remaining energy is 598 mAh at the end of the period, *i.e.* an excess of remaining energy of 2 mAh has been substituted for the shortage of 1 mAh, and measurement frequency shifts are again allowed.

According to the invention, once shifted to the higher measurement frequency F2, this frequency is not maintained forever. Instead the measurement frequency is shifted back to F1 once the fluid flow rate or the energy flow rate has stabilized, or in case a certain time has elapsed in the higher measurement frequency mode.

In terms of stabilization, changes in the flow rates may be evaluated with every measurement, and in case the changes go under a certain predetermined flow rate change, *i.e.* in case the flow rate stabilizes, the measurement frequency reverts to F1 to save energy. Alternatively, the consumption meter may revert to the measurement frequency F1 after a certain period, such as after 1 minute or 2 minutes of frequent measurements at F2, to save energy.

According to the invention it should be understood that with the reversion of the measurement frequency from F2 to F1, no criteria in terms of remaining power source energy needs to be fulfilled. Reverting to the lower measurement frequency F1 *per se* involves a saving of power source energy compared to the measurement frequency F2, and therefore needs not be checked in terms of allowability *re*. power source energy saving. Essential is, however, that the higher frequency F2 is not maintained forever, and that the consumption meter at some point reverts to the initial measurement frequency F1.

According to an embodiment of the invention the consumption meter is further arranged to:
- (b4) in between (b2) and (b3) measure the one of the fluid flow rate and the energy flow rate with a measurement frequency F3, F2 > F3 > F1, provided that the second change in any of the fluid flow rate or the energy flow rate goes under the second predetermined change of the fluid flow rate or the energy flow rate, respectively, or that a certain time interval has elapsed during (b2).

With this embodiment of the invention a level of intermediate measurement frequency F3, F2 > F3 > F1, *i.e.* a measurement frequency F3 between F2 and F1, is introduced.

According to the invention this level of intermediate measurement frequency is introduced as an intermediate level when shifting back from measurement frequency F2 to the original measurement frequency F1. Thus, according to the invention, upon a flow rate stabilization or a certain time elapse, the measurement frequency is not shifted right back to F1. Instead the frequency is shifted to the intermediate measurement F3, which saves power source energy compared to the higher measurement frequency, however, still measures the flow rate at a higher frequency than F1.

The criteria for the measurement frequency shift from F2 to F3 may be similar to the criteria for shifting from F2 to F1, in terms of flow rate changes going under a predetermined flow rate threshold or in terms of an elapsed time of frequent measurements at measurement frequency F2.

According to the invention the measurement frequency is eventually shifted from F3 to F1, thus completing the cycle of adaptive measurement frequencies of the subject invention.

With an embodiment of invention the consumption meter is for measuring a fluid flow rate of the utility, the measuring means is for measuring the fluid flow rate of the utility, and the consumption meter is further arranged to:
- (b1) measure the fluid flow rate with the fluid flow rate measurement frequency F1;
- (b2) measure the fluid flow rate with the fluid flow rate measurement frequency F2, F2 > F1, provided that the first change in the fluid flow rate between two fluid flow rate measurements exceeds the first predetermined change of the fluid flow rate, and that the estimate of the remaining power source energy exceeds the budgeted remaining power source energy, and
- (b3) measure the fluid flow rate with the fluid flow rate measurement frequency F1, provided that the second change in the fluid flow rate between two fluid flow rate measurements goes under the second predetermined change of the fluid flow rate, or that a certain time interval has elapsed during (b2).

According to this embodiment of the invention the consumption meter is a flow meter.

The flow meter of this embodiment of the invention is arranged to measure the fluid flow rate at measurement frequencies F1 and F2, and to shift between these two measurements frequencies upon certain, predefined changes of the fluid flow rate. Being a flow meter, the consumption meter may not be arranged to measure the energy flow rate, and may not shift the measurement frequency of the flow rate upon changes of the energy flow rate.

According to the invention it should be understood, that the subject two fluid flow rate measurements may be two subsequent fluid flow rate measurements. Also it should be understood that the first and the second predetermined changes in the fluid flow rate may be selected from the group of absolute fluid flow rate changes, relative fluid flow rate changes, and changes in the gradient between two fluid flow rates.

According to an alternative embodiment of the invention the consumption meter is for measuring the fluid flow rate and the energy flow rate of the utility, the measuring means is for measuring the fluid flow rate and the energy flow rate of the utility, and the consumption meter is further arranged to:
- (b1) measure the fluid flow rate with the fluid flow rate measurement frequency F1;
- (b2) measure the fluid flow rate with the fluid flow rate measurement frequency F2, F2 > F1, provided that the first change in the energy flow rate between two energy flow rate measurements exceeds the first predetermined change of the energy flow rate, and that the estimate of the remaining power source energy exceeds the budgeted remaining power source energy, and
- (b3) measure the fluid flow rate with the fluid flow rate measurement frequency F1, provided that the second change in the energy flow rate between two energy flow rate measurements goes under the second predetermined change of the energy flow rate, or that a certain time interval has elapsed during (b2).

According to this embodiment of the invention the consumption meter is preferably a heat meter or a cooling meter, more preferably a heat meter.

The consumption meter of this embodiment of the invention is arranged to measure the fluid flow rate at the two measurement frequencies F1 and F2, and to shift between these two measurements frequencies upon certain, predefined changes of the energy flow rate.

The consumption meter according to this embodiment of the invention reacts to changes in the energy flow rate by shifting the measurement frequency of the fluid flow rate. In particular under conditions of constant or almost constant fluid temperature, the energy flow rate may be determined mainly or entirely from the fluid flow rate, which according to this embodiment may be monitored closely.

According to the invention it should be understood, that the two energy flow rate measurements may be two subsequent energy flow rate measurements. Also it should be understood that the first and the second predetermined changes in the energy flow rate may be selected from the group of absolute energy flow rate changes, relative energy flow rate changes, and changes in the gradient between two energy flow rates.

According to a further alternative embodiment of the invention the consumption meter is for measuring the fluid flow rate and the energy flow rate of the utility, the measuring means is for measuring the fluid flow rate and the energy flow rate of the utility, and wherein the consumption meter is further arranged to:
- (b1) measure the energy flow rate with the energy flow rate measurement frequency F1;
- (b2) measure the energy flow rate with the energy flow rate measurement frequency F2, F2 > F1, provided that the first change in the fluid flow rate between two fluid flow rate measurements exceeds the first predetermined change of the fluid flow rate, and that the estimate of the remaining power source energy exceeds the budgeted remaining power source energy, and
- (b3) measure the energy flow rate with the energy flow rate measurement frequency F1, provided that the second change in the fluid flow rate between two fluid flow rate measurements goes under the second predetermined change of the fluid flow rate, or that a certain time interval has elapsed during (b2).

According to this embodiment of the invention the consumption meter is preferably a heat meter or a cooling meter, more preferably a heat meter.

The consumption meter of this embodiment of the invention is arranged to measure the energy flow rate at measurement frequencies F1 and F2, and to shift between these two measurements frequencies upon certain, predefined changes of the fluid flow rate.

The consumption meter according to this embodiment of the invention reacts to changes in the fluid flow rate by shifting the measurement frequency of the energy flow rate. Changes in the fluid flow rate are a strong indication of changes in the energy flow rate, which according to this embodiment may be monitored closely.

According to another alternative embodiment of the invention the consumption meter is for measuring the energy flow rate of the utility, the measuring means is for measuring the energy flow rate of the utility, and the consumption meter is further arranged to:
- (b1) measure the energy flow rate with the energy flow rate measurement frequency F1;
- (b2) measure the energy flow rate with the energy flow rate measurement frequency F2, F2 > F1, provided that the first change in the energy flow rate between two energy flow rate measurements exceeds the first predetermined change of the energy flow rate, and that the estimate of the remaining power source energy exceeds the budgeted remaining power source energy, and
- (b3) measure the energy flow rate with the energy flow rate measurement frequency F1, provided that the second change in the energy flow rate between two energy flow rate measurements goes under the second predetermined change of the energy flow rate, or that a certain time interval has elapsed during (b2).

According to this embodiment of the invention the consumption meter is a heat meter or a cooling meter, preferably a heat meter.

The heat or cooling meter of this embodiment of the invention is arranged to measure the energy flow rate at measurement frequencies F1 and F2, and to shift between these two measurements frequencies upon certain, predefined changes of the energy flow rate. Being a heat or cooling meter, the consumption meter may still be arranged to measure the fluid flow rate, which constitutes an important parameter with the calculation of the energy flow rate, however, it may not shift the measurement frequency of the energy flow rate upon changes of the fluid flow rate only.

With the embodiments of the invention involving heat and/or cooling meters, the measuring means may comprise fluid temperature measuring means for measuring the fluid temperature of the utility, and measuring the energy flow rate may comprise measuring the fluid flow rate and the fluid temperature, and calculating the energy flow rate therefrom, such as from the product of the fluid flow rate and the fluid temperature.

According to these embodiments of the invention the measuring means of the consumption meter comprises dedicated temperature measurement means for measuring the fluid temperature of the utility, which in turn may be combined with the measured fluid flow rate to so calculate the energy flow rate as the product of the fluid flow rate and the fluid temperature.

According to these embodiments of the invention the product of the fluid flow rate and the fluid temperature is a measure of the energy flow rate. In particular with heat and/or cooling meters which apply temperature measuring means to both of the in-going and out-going flows of the utility, the energy flow rate may be calculated from the fluid temperature gradient. Per example, with a fluid flow rate of 10 l/min across a heating appliance, an in-going fluid temperature of 70°C, and an out-going fluid temperature of 50°C, the product of 200 1*°C/min of the fluid flow rate and the fluid temperature gradient is a measure of the energy flow rate.

According to the invention the fluid temperature may be measured at lower measurement frequencies than are the fluid flow rate and/or the energy flow rate.

Thus according to an embodiment of the invention the fluid temperature is, during (b1) and (b3), measured with a fluid temperature measurement frequency FT1, and, during (b2), measured with a fluid temperature measurement frequency FT2, F1 > FT1, and F2 > FT2.

According to this embodiment of the invention, the fluid temperature is, whenever the fluid flow rate or the energy flow rate is measured with the measurement frequency F1, measured with the temperature measurement frequency FT1, and, whenever the fluid flow rate or the energy flow is measured with the measurement frequency F2, measured with the temperature measurement frequency FT1, both of the temperature measurement frequencies being lower than their fluid or energy flow rate measurement frequency counterparts.

Application of lower fluid temperature measurement frequencies compared to flow rate measurement frequencies has at least two advantages in terms of power source energy saving: First, compared to the fluid flow rate, with a heating or cooling utility, the utility temperature is likely to vary more slowly. To save energy without compromising the measurement quality, it is therefore appropriate to measure the fluid temperature at a lower measurement frequency than the fluid flow rate, *i.e.* to focus on the most volatile parameter. Second, with most consumption meters, conducting a temperature measurement consumes more energy than does conducting a fluid flow rate measurement. Accordingly, saving temperature measurements accounts for higher overall energy savings than does saving fluid flow rate measurements.

Applying different measurement frequencies with fluid temperature measurements and fluid flow rate measurements requires a specific scheme when combining the two types of data.

Thus according to an embodiment of the invention, measuring the energy flow rate comprises calculating the energy flow rate as the product of the latest measured fluid flow rate and the latest measured fluid temperature.

According to this embodiment of the invention, whenever fluid temperature measurements and fluid flow rate measurements are not synchronized, a measure of the energy flow rate may be the product of the latest, *i.e.* the most recent of each of the measured flow rate and temperature. Per example, three fluid flow rate measurements values at t=1 min., t=2 min., and t=3 min. of 10 l/min., 12 l/min. and 15 l/min., respectively, may, in the absence of any fluid temperature measurements since t = 0 min., be combined with a single measured fluid temperature of 60°C at t = 0 min. Thus, measures of the energy flow rate at t = 1 min., t = 2 min., and t = 3 min. may be calculated as 600 1*°C/min, 720 1*°C/min, and 900 1*°C/min, respectively, *i.e.* combining the fluid flow rate as t = 1 min. and the fluid temperature at t = 0 min., the fluid flow rate as t = 2 min. and the fluid temperature at t = 0 min., etc.

In an embodiment of the invention the estimate of the remaining power source energy at the time of estimation is calculated as the difference between an initial power source energy and a power source energy consumption at the time of the estimation, calculated from the sum of power source energy consumptions at each flow rate measurement conducted up to the time of the estimation, such as shown with the above definition of the estimate of the remaining power source energy.

Also in an embodiment of the invention, the budgeted remaining power source energy at the time of estimation is calculated as the difference between an initial power source energy and a power source energy consumption at the time of estimation, calculated from a uniform power source energy consumption rate over a predefined lifetime of the power source, such as shown with the above definition of the budgeted remaining power source energy.

According to this embodiment of the invention it should be understood that the budgeted remaining energy varies linearly over the lifetime of the power source, ranging from the initial power source energy at the onset of the life of the power source to the exhaustion of the power source at the end-of-life of the power source, and varying linearly over time therebetween.

According to the invention the so-estimated and so-budgeted remaining power source energies are compared to determine, whether the shift to a higher flow rate measurement frequency is allowable or not.

It should be understood that the estimated and budgeted remaining power source energies applied with the comparison (a3) according to the invention relate to simultaneous values of the estimated and budgeted remaining power source energy.

The budgeted remaining power source energy at the time of estimation may as well be calculated as the difference between an initial power source energy and the sum of a power source energy consumption at the time of estimation, calculated from a uniform power source energy consumption rate over a predefined lifetime of the power source, and a predefined additional amount of power source energy.

With this embodiment of the invention, as with the above embodiment, the budgeted remaining energy varies linearly over the life time of the power source. With this embodiment, however, the budgeted remaining energy is reduced by a predefined additional amount of power source energy.

According to this embodiment of the invention it should be understood that the reduction of the budgeted remaining energy by a predefined additional amount of energy corresponds to the additional amount of energy being made available for high measurement frequency operation of the consumption meter. Put differently, reducing the budgeted remaining energy by such amount of energy corresponds to a similar-sized energy buffer being added to the estimated remaining power source energy.

Whereas the predefined additional amount of energy allows for additional high measurement frequency operation of the consumption meter at F2, the criterion that the estimated remaining energy should exceed the budgeted remaining energy to allow shifting to high measurement frequency operation still applies. Thus, whenever the additional amount of power source energy, *i.e.* the additional energy "buffer" provided, has been consumed, the consumption meter is no longer allowed to shift to the high frequency mode until another excess of the estimated remaining energy over the budgeted remaining energy has "grown".

According to a second aspect of the invention a method of measuring one of a fluid flow rate and an energy flow rate of a utility by a consumption meter is provided, the method comprising the steps of:
- (a1) calculating an estimate of the remaining power source energy of a power source of the consumption meter,
- (a2) calculating a budgeted remaining power source energy,
- (a3) comparing the estimate of the remaining power source energy and the budgeted remaining power source energy,
- (b1) measuring the one of the fluid flow rate and the energy flow rate with a measurement frequency F1;
- (b2) measuring the one of the fluid flow rate and the energy flow rate with a measurement frequency F2, F2 > F1, provided that a first change in any of the fluid flow rate or the energy flow rate exceeds a first predetermined change of the fluid flow rate or the energy flow rate, respectively, and that the estimate of the remaining power source energy exceeds the budgeted remaining power source energy, and
- (b3) measuring the one of the fluid flow rate and the energy flow rate with the measurement frequency F1, provided that a second change in any of the fluid flow rate or the energy flow rate goes under a second predetermined change of the fluid flow rate or the energy flow rate, respectively, or that a certain time interval has elapsed during (b2).

Similar considerations as with the consumption meter of the first aspect of the invention apply to the method of the second aspect of the invention.

Further with the second aspect, an embodiment is provided, according to which the method further comprises the steps of:
- (b1) measuring the fluid flow rate with the fluid flow rate measurement frequency F1;
- (b2) measuring the fluid flow rate with the fluid flow rate measurement frequency F2, F2 > F1, provided that the first change in the fluid flow rate between two fluid flow rate measurements exceeds the first predetermined change of the fluid flow rate, and that the estimate of the remaining power source energy exceeds the budgeted remaining power source energy, and
- (b3) measuring the fluid flow rate with the fluid flow rate measurement frequency F1, provided that the second change in the fluid flow rate between two fluid flow rate measurements goes under the second predetermined change of the fluid flow rate, or that a certain time interval has elapsed during (b2).

This embodiment relates to the operation of a flow meter.

Also with the second aspect, another embodiment is provided, according to which the method further comprises the steps of:
- (b1) measuring the energy flow rate with the energy flow rate measurement frequency F1;
- (b2) measuring the energy flow rate with the energy flow rate measurement frequency F2, F2 > F1, provided that the first change in the energy flow rate between two energy flow rate measurements exceeds the first predetermined change of the energy flow rate, and that the estimate of the remaining power source energy exceeds the budgeted remaining power source energy, and
- (b3) measuring the energy flow rate with the energy flow rate measurement frequency F1, provided that the second change in the energy flow rate between two energy flow rate measurements goes under the second predetermined change of the energy flow rate, or that a certain time interval has elapsed during (b2).

This embodiment relates to the operation of a heat meter or a cooling meter.

In general the various aspects of the invention may be combined and coupled in any way possible within the scope of the invention. These and other aspects, features and/or advantages of the invention will be apparent from and elucidated with reference to the embodiment described hereinafter.

### BRIEF DESCRIPTION OF THE DRAWINGS

An embodiment of the invention will be described, by way of example only, with reference to the drawings, in which:
Fig. 1 shows a graph of the shifting of measurement frequencies with flow rate changes of a heat meter according to the invention; and
Fig. 2 shows a graph of the estimate of the remaining power source energy vs. the budgeted remaining power source energy of the heat meter of Fig. 1.

### DESCRIPTION OF AN EMBODIMENT

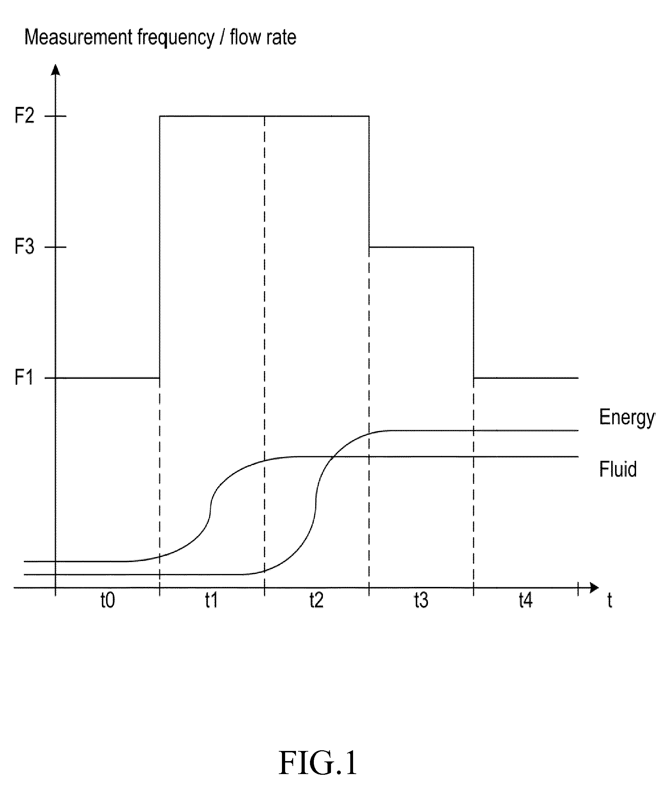

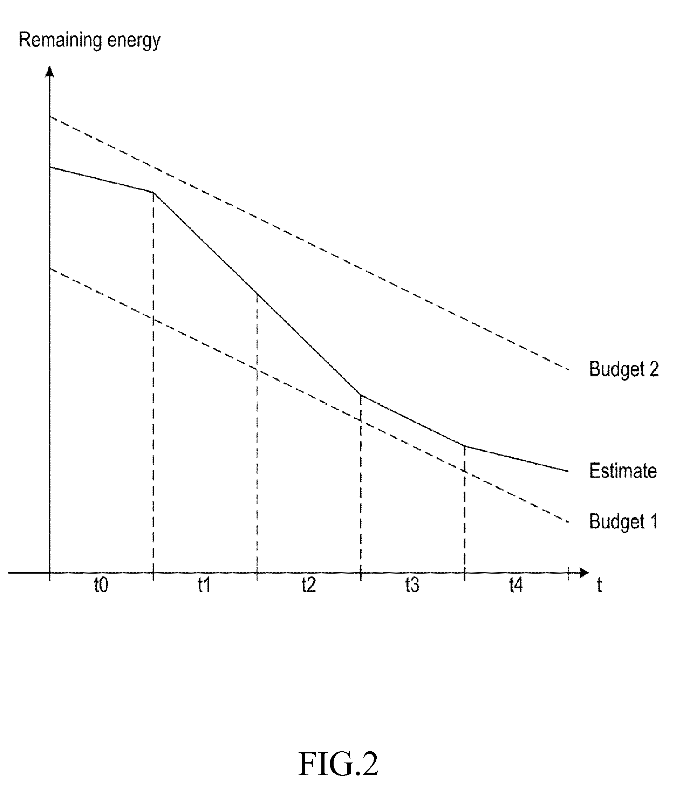

An embodiment of the invention is illustrated in combined Figures 1 and 2, which show the simultaneous shifting of measurement frequencies, flow rate changes, and estimated and budgeted remaining power source energy during five time intervals t0-t4 for a heat meter according to the invention.

With Figure 1 is shown an initial time interval t0, during which the heat meter measures the fluid flow rate and the energy flow rate at a low measurement frequency F1. The fluid flow rate is shown with the curve "Fluid", whereas the energy flow rate is shown with the curve "Energy". During t0, no changes are observed with any of the fluid flow rate or the energy flow rate.

At the onset of the next time interval t1, and throughout t1, a change in the fluid flow rate is measured with the heat meter. In absolute terms, the change in the flow rate exceeds a predetermined change of the flow rate, and in response hereto the measurement frequency is shifted from F1 to a higher measurement frequency F2. During t1, the energy flow rate is unchanged compared to t0.

At the onset of the next time interval t2, and throughout t2, a change in the energy flow rate is measured with the heat meter. Due to this latter change, the heat meter is maintained in the high frequency measurement mode of F2, even though the fluid flow rate has stabilized, which would otherwise trigger the heat meter to revert to a lower measurement frequency, such as to F1.

Moving into the time interval t3, both of the fluid flow rate and the energy flow rate have stabilized, and the measurement frequency is shifted to F3, which is an intermediate measurement frequency between F2 and F1.

Moving into the final time interval t4, the stabilized fluid and energy flow rates are maintained, and the measurement frequency is further shifted to the initial measurement frequency F1, *i.e.* the measurement frequency cycle according to the invention is completed.

With Figure 2 the simultaneous comparison of the estimated and budgeted remaining power source energies are shown.

The curve "Estimate" shows the estimate of the remaining energy vs. time during the time intervals t0-t4. With each of the time intervals the slope of respective curve sections indicates the power source energy consumption rate, *i.e.* the power source energy consumption per time. Thus with t0 and t4, the lowest measurement frequency F1 is applied, and the energy consumption rate is small. With t1 and t2, the high measurement frequency F2 is applied, and the energy consumption rate is high. Eventually, with t3, the intermediate measurement frequency F3 is applied, and the energy consumption rate is higher than during t0 and t4, however, lower than during t1 and t2.

The curves "Budget 1" and "Budget 2" with Figure 2 show two different versions of budgets of the remaining power source energy vs. time. Both curves are straight lines as both budgets are calculated from a uniform power source energy consumption rate over a predefined lifetime of the power source.

Throughout the time intervals t0-t4, the "Budget 1" curve is below the "Estimate" curve, *i.e.* the estimate of the remaining power source energy exceeds the budgeted remaining power source energy as represented by the "Budget 1" curve. In particular the estimate exceeds the budgeted remaining energy at the onset of time interval t1, *i.e.* at the time of shifting from measurement frequency F1 to measurement frequency F2. Accordingly, the shift of measurement frequency from F1 to F2 at the onset of time interval t1 is allowed as the provisions of (b2) of the present invention are fulfilled, in terms of fluid flow rate change (see above) as well as in terms of remaining power source energy.

The alternative curve "Budget 2", which represents an alternative budget of remaining energy vs. time, is above the "Estimate" curve, *i.e.* the estimate of the remaining power source energy does not exceed the budgeted remaining power source energy as represent by the "Budget 2" curve. In particular the estimate does not exceed the budgeted remaining energy at the onset of time interval t1, and in such case the otherwise flow-rate-wise intended shift from measurement frequency F1 to measurement frequency F2 would have been aborted as it would not have been allowed energy-budget-wise.

As can be seen from the "Estimate" curve relative to both of "Budget 1" and "Budget 2" curves, the slope of the "Estimate" curve during the time intervals t0 and t4 is lower than the slope of the "Budget" curves. Thus, during these time intervals, the power source energy consumption rate, as represented by the slope of the "Estimate" curve, is smaller than the budgeted power source energy consumption rate as calculated as a uniform power source energy consumption rate over the lifetime of the power source. Accordingly, the actual power source energy consumption rate is less than the budgeted power source energy consumption rate, *i.e.* during these time intervals power source energy is "saved" compared to the budgeted power source energy consumption, and the excess of remaining energy over the budget is increased.

In contrast, during the time intervals t1 and t2, the estimate of the power source energy consumption rate is higher than the budgeted power source energy consumption rate, *i.e.* an excess of power source energy is consumed compared to the budgeted power source energy consumption. Thus, overall, during these time intervals, the excess of remaining energy over the budget is reduced.

With this embodiment, during the time interval t3, the estimate of the power source energy consumption rate coincides with the budgeted power source energy consumption rate, *i.e.* the actual power source energy consumption rate is equal to the budgeted power source energy consumption rate, and the excess remaining energy over the budget is neither increased nor reduced.

Although the present invention has been described in connection with the specified embodiment, it should not be construed as being in any way limited to the presented examples. The invention can be implemented by any suitable means; and the scope of the present invention is to be interpreted in the light of the accompanying claim set.

## Claims

1. A consumption meter for measuring one of a fluid flow rate and an energy flow rate of a utility, the consumption meter comprising:
- measuring means for measuring the one of the fluid flow rate and the energy flow rate of the utility,
- an electronic circuit for operating the measuring means,
- a power source for operating the consumption meter and having a power source energy, and
- a power source energy calculation unit being arranged to:
- (a1) calculate an estimate of the remaining power source energy,
- (a2) calculate a budgeted remaining power source energy, and
- (a3) compare the estimate of the remaining power source energy and the budgeted remaining power source energy, and,
wherein the consumption meter is arranged to:
- (b1) measure the one of the fluid flow rate and the energy flow rate with a measurement frequency F1;
- (b2) measure the one of the fluid flow rate and the energy flow rate with a measurement frequency F2, F2 > F1, provided that a first change in any of the fluid flow rate or the energy flow rate exceeds a first predetermined change of the fluid flow rate or the energy flow rate, respectively, and that the estimate of the remaining power source energy exceeds the budgeted remaining power source energy, and
- (b3) measure the one of the fluid flow rate and the energy flow rate with the measurement frequency F1, provided that a second change in any of the fluid flow rate or the energy flow rate goes under a second predetermined change of the fluid flow rate or the energy flow rate, respectively, or that a certain time interval has elapsed during (b2).

2. The consumption meter according to claim 1, wherein the consumption meter is further arranged to:
- (b4) in between (b2) and (b3) measure the one of the fluid flow rate and the energy flow rate with a measurement frequency F3, F2 > F3 > F1, provided that the second change in any of the fluid flow rate or the energy flow rate goes under the second predetermined change of the fluid flow rate or the energy flow rate, respectively, or that a certain time interval has elapsed during (b2).

3. The consumption meter according to any of claims 1 and 2, wherein the consumption meter is for measuring the fluid flow rate of the utility, wherein the measuring means is for measuring the fluid flow rate of the utility, and wherein the consumption meter is further arranged to:
- (b1) measure the fluid flow rate with the fluid flow rate measurement frequency F1;
- (b2) measure the fluid flow rate with the fluid flow rate measurement frequency F2, F2 > F1, provided that the first change in the fluid flow rate between two fluid flow rate measurements exceeds the first predetermined change of the fluid flow rate, and that the estimate of the remaining power source energy exceeds the budgeted remaining power source energy, and
- (b3) measure the fluid flow rate with the fluid flow rate measurement frequency F1, provided that the second change in the fluid flow rate between two fluid flow rate measurements goes under the second predetermined change of the fluid flow rate, or that a certain time interval has elapsed during (b2).

4. The consumption meter according to any of claims 1 and 2, wherein the consumption meter is for measuring the fluid flow rate and the energy flow rate of the utility, wherein the measuring means is for measuring the fluid flow rate and the energy flow rate of the utility, and wherein the consumption meter is further arranged to:
- (b1) measure the fluid flow rate with the fluid flow rate measurement frequency F1;
- (b2) measure the fluid flow rate with the fluid flow rate measurement frequency F2, F2 > F1, provided that the first change in the energy flow rate between two energy flow rate measurements exceeds the first predetermined change of the energy flow rate, and that the estimate of the remaining power source energy exceeds the budgeted remaining power source energy, and
- (b3) measure the fluid flow rate with the fluid flow rate measurement frequency F1, provided that the change in the second energy flow rate between two energy flow rate measurements goes under the second predetermined change of the energy flow rate, or that a certain time interval has elapsed during (b2).

5. The consumption meter according to any of claims 1 and 2, wherein the consumption meter is for measuring the fluid flow rate and the energy flow rate of the utility, wherein the measuring means is for measuring the fluid flow rate and the energy flow rate of the utility, and wherein the consumption meter is further arranged to:
- (b1) measure the energy flow rate with the energy flow rate measurement frequency F1;
- (b2) measure the energy flow rate with the energy flow rate measurement frequency F2, F2 > F1, provided that the first change in the fluid flow rate between two fluid flow rate measurements exceeds the first predetermined change of the fluid flow rate, and that the estimate of the remaining power source energy exceeds the budgeted remaining power source energy, and
- (b3) measure the energy flow rate with the energy flow rate measurement frequency F1, provided that the second change in the fluid flow rate between two fluid flow rate measurements goes under the second predetermined change of the fluid flow rate, or that a certain time interval has elapsed during (b2).

6. The consumption meter according to any of claims 1 and 2, wherein the consumption meter is for measuring the energy flow rate of the utility, wherein the measuring means is for measuring the energy flow rate of the utility, and wherein the consumption meter is further arranged to:
- (b1) measure the energy flow rate with the energy flow rate measurement frequency F1;
- (b2) measure the energy flow rate with the energy flow rate measurement frequency F2, F2 > F1, provided that the first change in the energy flow rate between two energy flow rate measurements exceeds the first predetermined change of the energy flow rate, and that the estimate of the remaining power source energy exceeds the budgeted remaining power source energy, and
- (b3) measure the energy flow rate with the energy flow rate measurement frequency F1, provided that the second change in the energy flow rate between two energy flow rate measurements goes under the second predetermined change of the energy flow rate, or that a certain time interval has elapsed during (b2).

7. The consumption meter according to any of claims 1, 2, and 4-6, wherein the measuring means comprises fluid temperature measuring means for measuring the fluid temperature of the utility, and wherein measuring the energy flow rate comprises measuring the fluid flow rate and the fluid temperature, and calculating the energy flow rate as the product of the fluid flow rate and the fluid temperature.

8. The consumption meter according to claim 7, wherein, during (b1) and (b3), the fluid temperature is measured with a fluid temperature measurement frequency FT1, wherein, during (b2), the fluid temperature is measured with a fluid temperature measurement frequency FT2, and wherein F1 > FT1, and F2 > FT2.

9. The consumption meter according to claim 8, wherein measuring the energy flow rate comprises calculating the energy flow rate as the product of the latest measured fluid flow rate and the latest measured fluid temperature.

10. The consumption meter according to any of the preceding claims, wherein the estimate of the remaining power source energy at the time of estimation is calculated as the difference between an initial power source energy and a power source energy consumption at the time of the estimation, calculated from the sum of power source energy consumptions at each flow rate measurement conducted up to the time of the estimation.

11. The consumption meter according to claim 10, wherein the budgeted remaining power source energy at the time of estimation is calculated as the difference between an initial power source energy and a power source energy consumption at the time of estimation, calculated from a uniform power source energy consumption rate over a predefined lifetime of the power source.

12. The consumption meter according to claim 10, wherein the budgeted remaining power source energy at the time of estimation is calculated as the difference between an initial power source energy and the sum of a power source energy consumption at the time of estimation, calculated from a uniform power source energy consumption rate over a predefined lifetime of the power source, and a predefined additional amount of power source energy.

13. A method of measuring one of a fluid flow rate and an energy flow rate of a utility by a consumption meter, the method comprising the steps of:
- (a1) calculating an estimate of the remaining power source energy of a power source of the consumption meter,
- (a2) calculating a budgeted remaining power source energy,
- (a3) comparing the estimate of the remaining power source energy and the budgeted remaining power source energy,
- (b1) measuring the one of the fluid flow rate and the energy flow rate with a measurement frequency F1;
- (b2) measuring the one of the fluid flow rate and the energy flow rate with a measurement frequency F2, F2 > F1, provided that a first change in any of the fluid flow rate or the energy flow rate exceeds a first predetermined change of the fluid flow rate or the energy flow rate, respectively, and that the estimate of the remaining power source energy exceeds the budgeted remaining power source energy, and
- (b3) measuring the one of the fluid flow rate and the energy flow rate with the measurement frequency F1, provided that a second change in any of the fluid flow rate or the energy flow rate goes under a second predetermined change of the fluid flow rate or the energy flow rate, respectively, or that a certain time interval has elapsed during (b2).

14. The method according to claim 13, the method further comprising the steps of:
- (b1) measuring the fluid flow rate with the fluid flow rate measurement frequency F1;
- (b2) measuring the fluid flow rate with the fluid flow rate measurement frequency F2, F2 > F1, provided that the first change in the fluid flow rate between two fluid flow rate measurements exceeds the first predetermined change of the fluid flow rate, and that the estimate of the remaining power source energy exceeds the budgeted remaining power source energy, and
- (b3) measuring the fluid flow rate with the fluid flow rate measurement frequency F1, provided that the second change in the fluid flow rate between two fluid flow rate measurements goes under the second predetermined change of the fluid flow rate, or that a certain time interval has elapsed during (b2).

15. The method according to claim 13, the method further comprising the steps of:
- (b1) measuring the energy flow rate with the energy flow rate measurement frequency F1;
- (b2) measuring the energy flow rate with the energy flow rate measurement frequency F2, F2 > F1, provided that the first change in the energy flow rate between two energy flow rate measurements exceeds the first predetermined change of the energy flow rate, and that the estimate of the remaining power source energy exceeds the budgeted remaining power source energy, and
- (b3) measuring the energy flow rate with the energy flow rate measurement frequency F1, provided that the second change in the energy flow rate between two energy flow rate measurements goes under the second predetermined change of the energy flow rate, or that a certain time interval has elapsed during (b2).
